# EUROPÄISCHE PATENTSCHRIFT

(11) **EP 2 318 165 B1**
(45) Veröffentlichungstag und Bekanntmachung des Hinweises auf die Patenterteilung: **08.10.2014**
(21) Anmeldenummer: 09782041.9
(22) Anmeldetag: 20.08.2009
(51) Int. Cl.: B23B 29/034, B23C 5/24

(54) **MASCHINENWERKZEUG MIT VERSTELLBARER SCHNEIDPLATTE**
MACHINE TOOL WITH ADJUSTABLE CUTTING PLATE
OUTIL D'USINAGE DOTÉ D'UNE PLAQUETTE DE COUPE RÉGLABLE

(30) Priorität: 04.09.2008 DE 102008045674
(43) Veröffentlichungstag der Anmeldung: 11.05.2011
(73) Patentinhaber: Komet Group GmbH, 74354 Besigheim (DE)
(72) Erfinder: KRETZSCHMANN, Uwe, 21483 Wangelau (DE); SPORS, Benno, 71672 Marbach (DE); HODZA, Erkan, 71679 Asperg (DE)
(74) Vertreter: Wolf, Eckhard
(86) Internationale Anmeldenummer: PCT/EP2009/060783
(87) Internationale Veröffentlichungsnummer: WO 2010/026056

(56) Entgegenhaltungen:
- EP-A- 0 282 090
- EP-A- 1 136 162
- WO-A-96/08334
- DE-A1- 2 112 689

## Beschreibung

Die Erfindung betrifft ein Maschinenwerkzeug mit einem eine Drehachse aufweisenden Grundkörper, mit mindestens einer in den Grundkörper eingeformten Tasche und mit mindestens einem eine Schneidplatte tragenden Schneidenträger, wobei der Schneidenträger mit zwei einen Winkel miteinander einschließenden- Seitenflächen gegen je eine Seitenstützfläche und mit ihrem Boden gegen eine Bodenstützfläche der Tasche anliegt und mit einem Spannelement lösbar in der Tasche eingespannt ist, und wobei die Schneidplatte mit einer wirksamen Schneide über den Schneidenträger und den Grundkörper frei nach außen übersteht.

Die einen Sitz für den Schneidenträger bildende Tasche sorgt dafür, dass der Schneidenträger und damit die Schneidplatte in ihrer Lage innerhalb des Grundkörpers bestimmt ist. Bei gegebener Geometrie des Schneidenträgers und der Schneidplatte bestimmt die Lage der Taschen im Grundkörper den Schneidradius. Um Herstellungstoleranzen ausgleichen zu können, ist es bereits bekannt, die Schneidplatten verstellbar im Grundkörper anzuordnen. Zu diesem Zweck ist der Schneidenträger gegenüber dem Grundkörper verstellbar angeordnet.

Ein Maschinenwerkzeug gemäß dem Oberbegriff des Anspruchs 1 ist aus WO 96/08334 bekannt.

Weiter ist es bei einem Maschinenwerkzeug, bei welchem die Schneidplatte unmittelbar, also ohne Schneidenträger, in einem Plattensitz mit zwei Kantenstützflächen und einer Bodenstützfläche abgestützt ist, an sich bekannt (DE-A-10 108 103), dass eine der beiden Kantenstützflächen als an einem gegenüber dem Grundkörper längs einer Verschiebeachse verschiebbaren Stellkörper angeordnete, mit der Verschiebeachse einen spitzen Winkel einschließende Keilfläche ausgebildet ist, gegen die die Schneidplatte mit ihrer der wirksamen Schneide gegenüberliegenden, parallel zur Keilfläche ausgerichteten Plattenkante anliegt, und dass die andere Kantenstützfläche senkrecht zur Verschiebeachse des Verstellkörpers ausgerichtet ist, wobei die Verschiebeachse des Stellkörpers parallel zur Bodenstützfläche des zugehörigen Plattensitzes ausgerichtet ist. Zum Justieren der Schneidplatte wird dort die Kopfschraube an der Schneidplatte etwas gelöst. Sobald der richtige Bohrdurchmesser eingestellt ist, wird die Kopfschraube wieder angezogen. Dabei wird auch der Stellkörper am Grundkörper festgelegt. Die bekannte Verstellvorrichtung eignet sich nur zur Verstellung von radial am Grundkörper ausgerichteten Schneidplatten. Die Verstellung erfolgt stets senkrecht zur Feststellschraube der Schneidplatte im Grundkörper, die zum Zweck der Verstellung leicht gelöst werden muss. Die Verstellung von Tangential-Schneidplatten parallel zu deren Feststellschraube ist mit dem bekannten Verstellmechanismus nicht möglich.

Ausgehend hiervon, liegt der Erfindung die Aufgabe zugrunde, ein Maschinenwerkzeug der eingangs angegebenen Art dahingehend zu verbessern, dass auch eine Feinverstellung von Tangential-Schneidplatten im Grundkörper möglich ist.

Zur Lösung dieser Aufgabe werden die im Patentanspruch 1 angegebenen Merkmale vorgeschlagen. Vorteilhafte Ausgestaltungen und Weiterbildungen der Erfindung ergeben aus den abhängigen Ansprüchen.

Der erfindungsgemäßen Lösung liegt vor allem der Gedanke zugrunde, dass die Bodenstützfläche für den Schneidenträger eine an einem gegenüber dem Grundkörper längs einer Verschiebeachse verschiebbaren Stellkörper angeordnete, mit der Verschiebeachse einen spitzen Winkel einschließende Keilfläche bildet, gegen die der Schneidenträger mit seinem als Gegenkeil ausgebildeten Boden anliegt, und dass die beiden Seitenstützflächen zugleich im Wesentlichen senkrecht zur Verschiebeachse des Stellkörpers ausgerichtete Führungsflächen für den Schneidenträger bei einem durch Verschieben des Stellkörpers ausgeführten Verstellvorgang bilden. Die Verschiebeachse des Stellkörpers ist dabei zweckmäßig parallel zur Drehachse des Grundkörpers ausgerichtet.

Das Grundprinzip der Erfindung besteht also darin, dass die Schneidplatte nicht direkt, sondern über ihren Schneidenträger gegenüber dem Grundkörper verstellt wird. Dies ist notwendig, um die Schneidplatte parallel zu ihrer Befestigungsrichtung am Grundkörper verstellen zu können. Mit diesen Maßnahmen ist es auch möglich, dass die Schneidplatte ohne nochmalige Feinjustierung gewendet oder ausgetauscht werden kann. Letzteres ist möglich, weil die Schneidplatte auf dem Schneidenträger fixiert wird und der Verstellvorgang allein über den Schneidenträger erfolgt. Der Schneidenträger muss seinerseits in der Tasche des Grundkörpers durch geeignete Spann- oder Klemmelemente dreidimensional fixiert werden. Um dies zu erreichen, wird gemäß einer bevorzugten Ausgestaltung der Erfindung vorgeschlagen, dass der Schneidenträger an einer dritten Seitenfläche eine mit den beiden gegen die Seitenstützflächen anliegenden Seitenflächen und mit dem Boden je einen Winkel einschließende Keilfläche bildet, gegen die ein Gegenkeil des relativ zum Grundkörper mit einem Verstellorgan unter Ausübung je einer in Richtung der beiden Seitenstützflächen und der Bodenstützfläche weisenden Kraftkomponente verschiebbaren Spannelements anliegt.

Die Schneidplatte ist zweckmäßig mittels eines Spann- oder Klemmelements, insbesondere mittels einer Klemmschraube, starr mit dem Schneidenträger verbunden. Der Schneidenträger kann als Kassette ausgebildet sein, der einen Plattensitz für eine als Wendeschneideplatte ausgebildete Schneidplatte aufweist. Um den gleichen Verstellmechanismus für unterschiedliche Bearbeitungsvorgänge einsetzen zu können, ist zweckmäßig eine Gruppe von mindestens zwei am Grundkörper gegeneinander austauschbaren Schneidenträgern vorgesehen, die Plattensitze für unterschiedliche Schneidplattenformen aufweisen.

Eine weitere vorteilhafte Ausgestaltung des Verstellmechanismus sieht vor, dass der Stellkörper mittels eines im Grundkörper angeordneten Keil- und/oder Gewindetriebs relativ zum Grundkörper verschiebbar ist. Andererseits kann auch das Spannelement zum Festlegen des Schneidenträgers im Grundkörper mittels eines im Grundkörper angeordneten Keil- und/oder Gewindetriebs betätigt werden. Der Keil- und/oder Gewindetrieb kann in beiden Fällen eine Schraube oder eine Differentialschraube umfassen, die mit einem Gewindeteil in ein Innengewinde des Grundkörpers eingreift und mit einem Keil, Konus oder einem weiteren Gewindeteil gegen den Stellkörper oder das Spannelement einwirkt.

Gemäß einer ersten Ausführungsvariante weist die Schraube eine gegen den Stellkörper anliegende Konusspitze auf.

Eine zweite Ausführungsvariante sieht vor, dass die Differentialschraube eine Gewindehülse trägt, die eine gegen den Stellkörper anliegende Keilfläche aufweist. Der Stellkörper kann dabei entgegen der Kraft mindestens einer Rückstellfeder verschiebbar sein.

Eine dritte Ausführungsvariante sieht vor, dass die Differentialschraube mit ihrem einen Gewindeteil in ein Innengewinde des Stellkörpers oder des Spannelements und mit ihrem anderen Gewindeteil in ein Innengewinde des Grundkörpers eingreift.

Die erfindungsgemäßen Werkzeuge, die mit radial verstellbaren Tangential-Wendeschneidplatten bestückt sind, können beispielsweise zum Feinbearbeiten von Innenbohrungen oder zum Finishen bei der Fräsbearbeitung verändert werden.

Im Folgenden wird die Erfindung anhand einiger in der Zeichnung in schematischer Weise dargestellter Ausführungsbeispiele näher erläutert. Es zeigen
- Fig. 1: ein Feinbohrwerkzeug mit vier über den Umfang verteilt angeordneten, tangential ausgerichteten mit je einem Verstellmechanismus zur Radialverstellung versehenen Wendeschneidplatten;
- Fig. 2a und b: eine erste Ausführungsvariante eines Verstellmechanismus für das Werkzeug nach Fig. 1 im Zusammenbauzustand und in einer Explosionsdarstellung, jeweils in schaubildlicher Darstellung;
- Fig. 2c bis f: eine Seitenansicht, eine Draufsicht eines Schneidplattenträgers nach Fig. 2a sowie je eine schaubildliche Darstellung des Schneidplattenträgers ohne und mit Schneidplatte;
- Fig. 2g: der federunterstützte Stellkörper mit keilförmiger Bodenstützfläche der Verstellmechanismus nach Fig. 2a;
- Fig. 2h: eine Verstellschraube mit Konusspitze zur Verstellung des Stellkörpers nach Fig. 2g in schaubildlicher Darstellung;
- Fig.2i: eine schaubildliche Darstellung des Spannelements zum Einspannen des Schneidenträgers nach Fig. 2a, 3a, 4a und 5a in der Grundkörpertasche;
- Fig. 2j: eine Differentialschraube zur Verstellung des Spannelements nach Fig. 2i;
- Fig. 3a und b: eine zweite Ausführungsvariante eines Verstellmechanismus für das Werkzeug nach Fig. 1 im Zusammenbauzustand und in einer Explosionsdarstellung, jeweils in schaubildlicher Darstellung;
- Fig. 3c bis f: eine Seitenansicht, eine Draufsicht eines Schneidplattenträgers nach Fig. 3a sowie je eine schaubildliche Darstellung des Schneidplattenträgers ohne und mit Schneidplatte;
- Fig. 3g: der federunterstützte Stellkörper mit keilförmiger Bodenstützfläche der Verstellvariante nach Fig. 3a;
- Fig. 3h: eine Gewindehülse mit gegen den Stellkörper nach Fig. 3g anliegender Keilfläche;
- Fig. 4a und b: eine dritte Ausführungsvariante eines Verstellmechanismus für das Werkzeug nach Fig. 1 im Zusammenbauzustand und in einer Explosionsdarstellung, jeweils in schaubildlicher Darstellung;
- Fig. 4c bis f: eine Seitenansicht, eine Draufsicht eines Schneidplattenträgers nach Fig. 4a sowie je eine schaubildliche Darstellung des Schneidplattenträgers ohne und mit Schneidplatte;
- Fig. 4g: ein Stellkörper mit keilförmiger Bodenstützfläche der Verstellvariante nach Fig. 4a;
- Fig. 4h: eine Differentialschraube zur Verstellung des Stellkörpers nach Fig. 4g;
- Fig. 5a und b: eine vierte Ausführungsvariante eines Verstellmechanismus für das Werkzeug nach Fig. 1 im Zusammenbauzustand und in einer Explosionsdarstellung, jeweils in schaubildlicher Darstellung.;
- Fig. 5c bis f: eine Seitenansicht, eine Draufsicht eines Schneidplattenträgers nach Fig. 5 sowie je eine schaubildliche Darstellung des Schneidplattenträgers ohne und mit Schneidplatte;
- Fig. 6a und b: je schaubildliche Darstellung des Verstellsystems nach Fig. 4a mit austauschbaren Schneidenträgern für eine quadratische und eine rhombische Wendeschneidplatte.

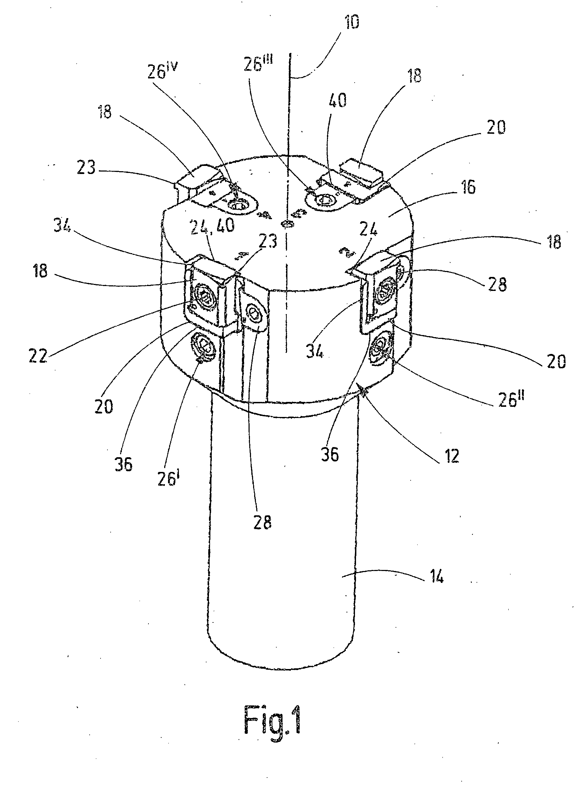

Das in Fig. 1 dargestellte rundlaufende Werkzeug ist für den Einsatz in Werkzeugmaschinen bestimmt. Es ist als vierschneidiges Aufbohrwerkzeug ausgebildet, dessen Drehachse mit 10 bezeichnet ist. Der Grundkörper 12 des Maschinenwerkzeugs weist einen Schaft 14 für den Anschluss an eine Maschinenspindel und einen Werkzeugskopf 16 mit vier über den Umfang verteilt angeordneten Schneidplatten 18 auf. Die Schneidplatten 18 sind in tangential stehender Ausrichtung an den kassettenartigen Schneidenträgern 20 angeordnet und dort mittels Klemmschrauben 22 fixiert. Sie stehen mit einer wirksamen Schneide 23 über den Schneidenträger 20 und den Grundkörper 12 nach außen über. Die Schneidenträger 20 greifen in je eine Tasche 24 des Grundkörpers 12 ein und sind dort mittels eines Verstellmechanismus 26', 26", 26", 26^{IV} in radialer Richtung verstellbar und in der gewählten Einstellung mittels eines Spannelements 28 festlegbar.

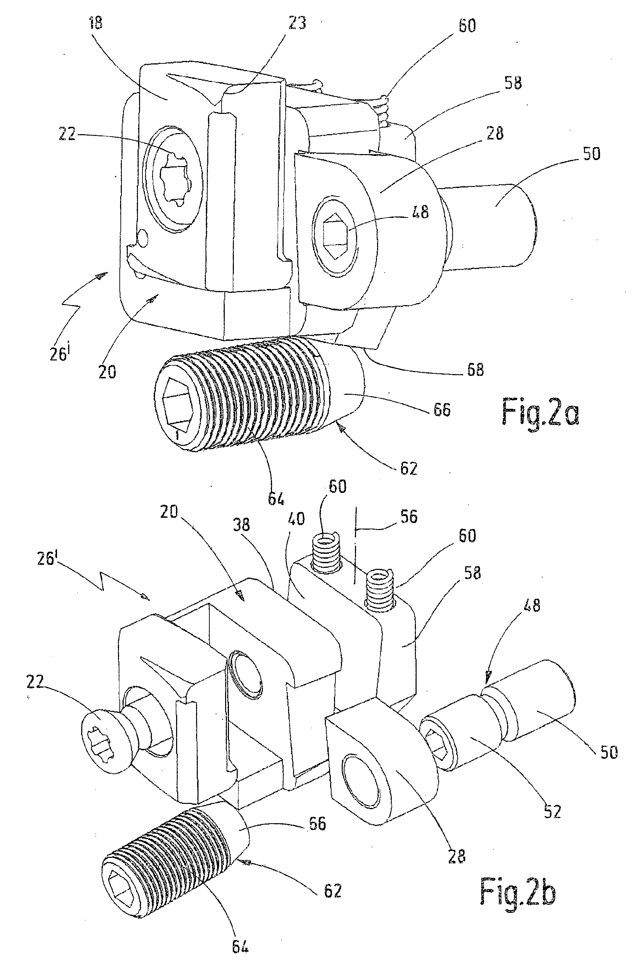

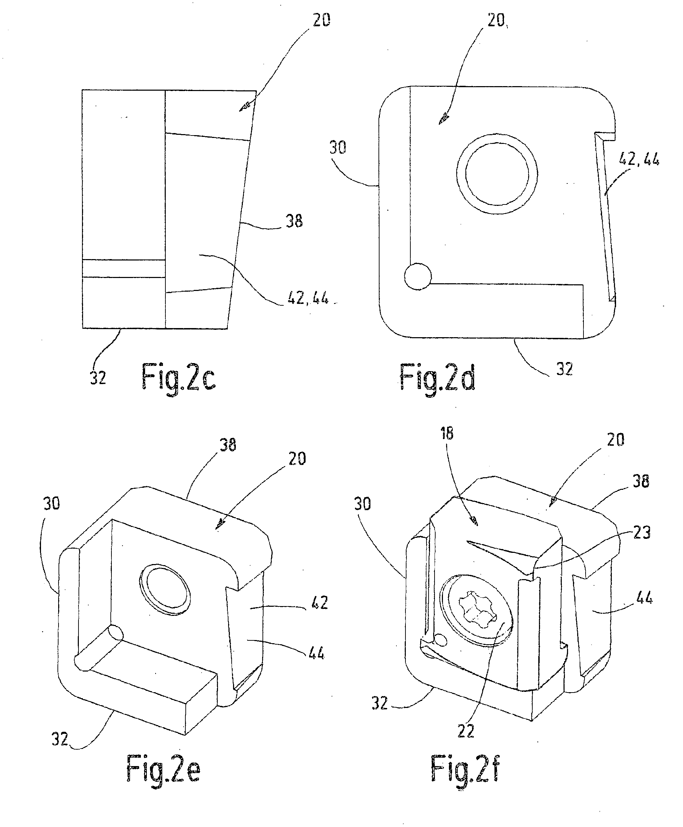

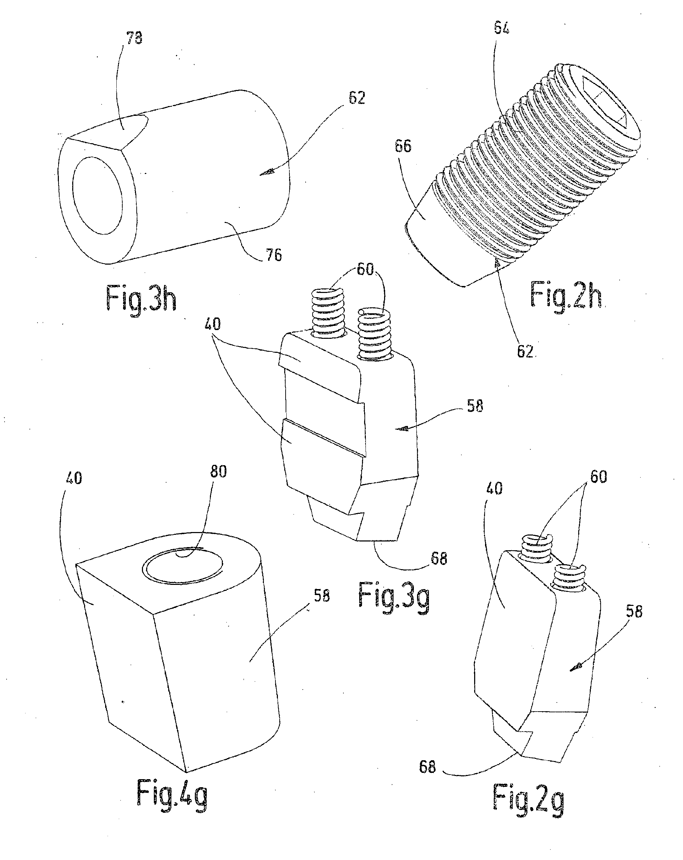

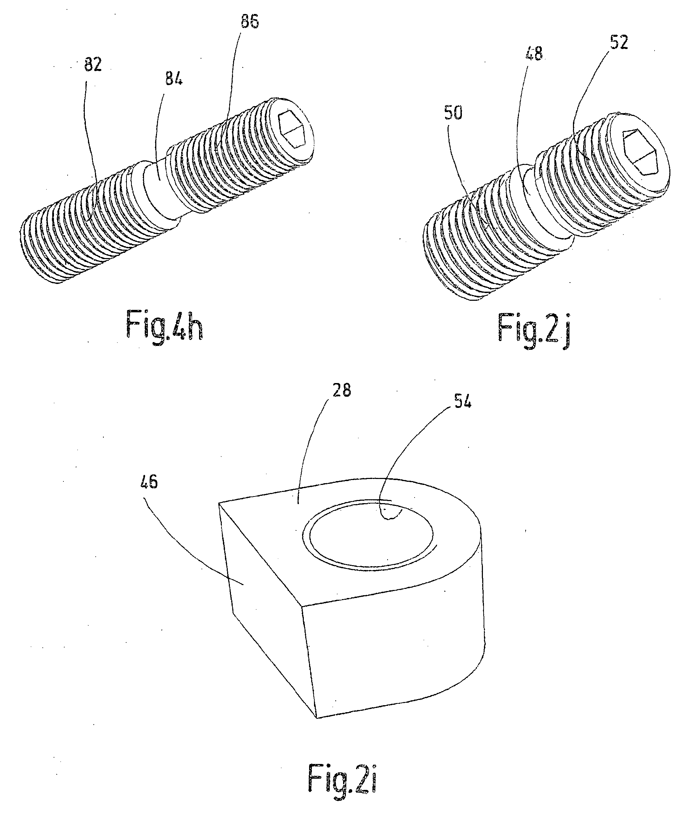

Zur Verstellung der Schneidplatten 18 des Maschinenwerkzeugs nach Fig. 1 werden vier verschiedene Varianten eines Verstellmechanismus 26', 26", 26"', 26^{IV} vorgeschlagen, die in Fig. 1 symbolhaft und in den Fig. 2, 3, 4 und 5 in ihren Details genauer dargestellt sind.

Bei allen vier Ausführungsvarianten weisen die Schneidenträger 20 jeweils zwei einen rechten Winkel miteinander einschließende Seitenflächen 30, 32 auf, mit denen sie gegen je eine Seitenstützfläche 34, 36 innerhalb der Tasche 24 anliegen. Außerdem stützen sich die Schneidenträger 20 mit ihrem Boden 38 gegen eine Bodenstützfläche 40 ab. An einer dritten Seitenfläche 42 bilden die Schneidenträger 20 eine mit den beiden gegen die Seitenstützfläche 34, 36 anliegenden Seitenfläche 30, 32 und mit dem Boden 38 je einen Winkel einschließende Keilfläche 44, gegen die ein Gegenkeil 46 des relativ zum Grundkörper unter Ausübung einer Spannkraft mit in Richtung der beiden Seitenstützflächen 34, 36 und der Bodenstützfläche 40 weisenden Kraftkomponenten verschiebbaren Spannelements 28 anliegt. Die Betätigung des Spannelements 28 erfolgt bei allen Ausführungsvarianten mit Hilfe einer Differentialschraube 48, deren eines Gewindeteil 50 in ein Innengewinde des Grundkörpers 12 und deren anderes Gewindeteil 52 mit anderer Gewindesteigung in ein Innengewinde 54 des Spannelements 28 eingreift. Die Keilflächen 46, 44 am Spannelement 28 und an der Seitenfläche 42 des Schneidenträgers sind so parallel zueinander ausgerichtet, dass es durch Verstellen der Differentialschraube 48 zu einer Einspannung des Schneidenträgers 20 in der Tasche 24 kommt. Zur Betätigung des Verstellmechanismus 26' bis 26^{IV} muss zuvor das Spannelement 28 durch Betätigen der Differentialschraube 48 von seiner Einspannstellung gelöst werden.

Die Radialverstellung des Schneidenträgers 20 und der damit verbundenen Wendeschneidplatte 18 erfolgt in allen Verstellvarianten über die Bodenstützfläche 40. Die Bodenstützfläche 40 bildet zu diesem Zweck eine an einem gegenüber dem Grundkörper 12 längs einer Verschiebeachse 56 verschiebbaren Stellkörper 58 angeordnete, mit der Verschiebeachse 56 einen spitzen Winkel einschließende Keilfläche, gegen die der Schneidenträger 20 mit seinem als Gegenkeil ausgebildeten Boden 38 anliegt. Die beiden Seitenstützflächen 30, 32 bilden zugleich im Wesentlichen senkrecht zur Verschiebeachse 56 des Stellkörpers 58 ausgerichtete Führungsflächen für den Schneidenträger 20, wenn dieser durch Verschieben des Stellkörpers 58 einen Verstellvorgang ausführt.

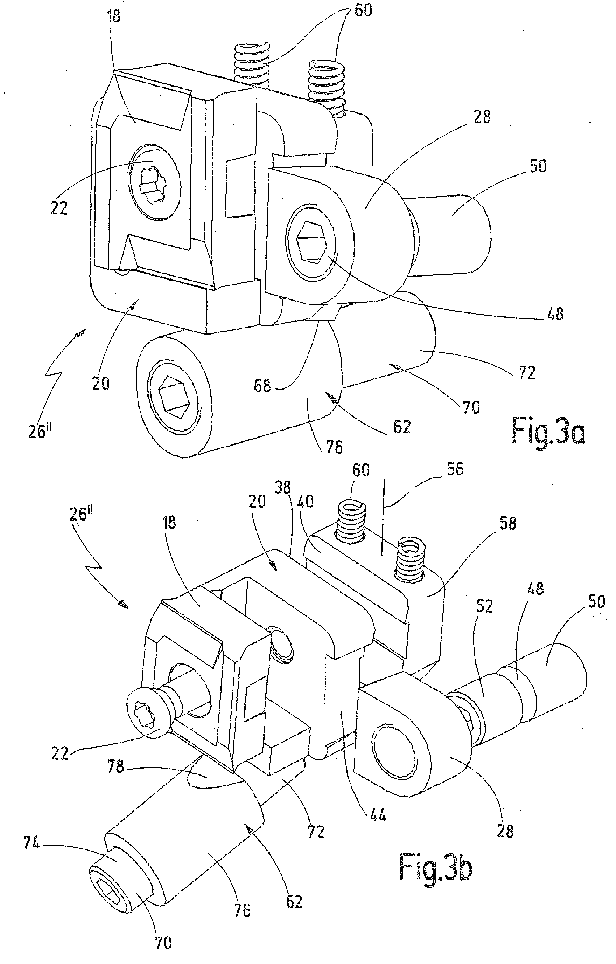

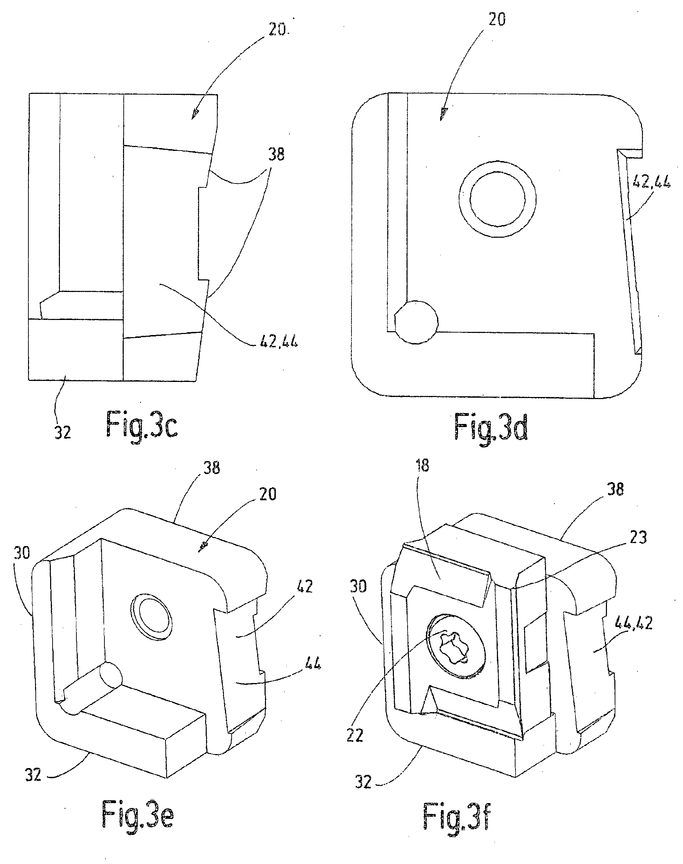

Im Falle der Ausführungsvarianten 1 und 2 des Verstellmechanismus 26', 26" (Fig. 2 und 3) erfolgt die Verstellung des Stellkörpers 58 in Richtung Verschiebeachse 56 entgegen der Kraft der Druckfedern 60 mit Hilfe eines radial betätigbaren Keil- und Gewindetriebs 62. Im Falle der Ausführungsvariante 1 (Verstellmechanismus 26') ist der Keil- und Gewindetrieb als eine in ein Innengewinde des Grundkörpers 12 eingreifende Schraube 64 mit einer Konusspitze 66 ausgebildet (Fig. 2a, b und h), deren Konusspitze 66 gegen eine Keilfläche 68 des Stellkörpers 58 anliegt. Die Keilfläche 68 ist auf der den Druckfedern 60 gegenüberliegenden Seite des Stellkörpers 58 angeordnet. Die Verschiebebewegung des Stellkörpers 58 wird über die als Keilfläche ausgebildete Bodenstützfläche 40 in eine radial zum Grundkörper 18 ausgerichtete Verschiebebewegung des Schneidenträgers 20 umgesetzt. Nach Erreichen des gewünschten Flugkreisdurchmessers der zugehörigen Schneidplatte 18 wird das Spannelement 28 über den Keil- und Gewindetrieb 62 gegen die Seitenfläche 42 des Schneidenträgers 20 verschoben, wodurch der Schneidenträger 20 so in der Tasche 24 festgeklemmt wird, dass eine weitere Betätigung des Keil- und Gewindetriebs 62 nicht mehr möglich ist.

Der Verstellmechanismus 26" der Ausführungsvariante 2 unterscheidet sich vom Verstellmechanismus 26' der Ausführungsvariante 1 im Wesentlichen dadurch, dass der Keil- und Gewindetrieb 62 eine Differentialschraube 70 aufweist, deren eines Gewindeteil 72 in ein Innengewinde des Grundkörpers eingreift und deren anderes Gewindeteil 74 eine Gewindehülse 76 mit angeformter Keilfläche 78 trägt. Die Gewindehülle 76 liegt mit ihrer Keilfläche 78 gegen die Keilfläche 68 des Stellkörpers 58 so an, dass dieser durch Betätigen der Differentialschraube 70 entgegen der Kraft der Druckfeder 60 in Richtung der Verschiebeachse 56 verschiebbar ist. Die durch die Bodenstützfläche 40 aufgespannte Keilfläche ist in diesem Fall zweigeteilt. Ebenso weist der Boden 38 des Schneidenträgers 20 eine zweigeteilte Gegenkeilfläche auf. Beim Betätigen der Differentialschraube 70 erfolgt wie im Falle der Ausführungsvariante 1 eine Radialverstellung des Schneidenträgers 20 mit seiner Schneidplatte 18. Nach Erreichen des gewünschten Flugkreisdurchmessers wird der Schneidenträger 20 über das Spannelement 28 in der Tasche 24 des Grundkörpers 12 festgelegt.

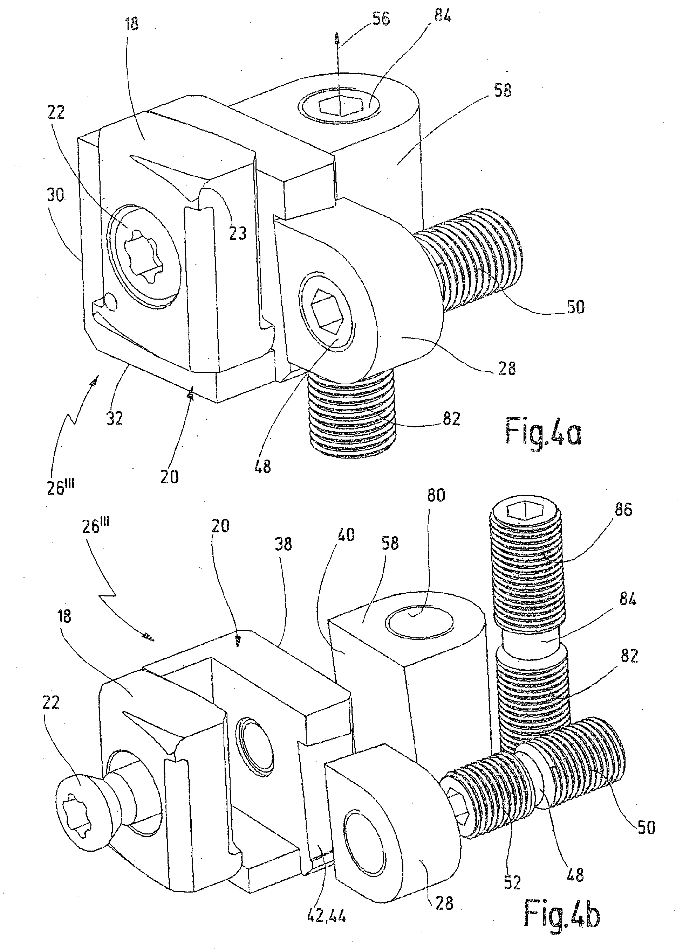

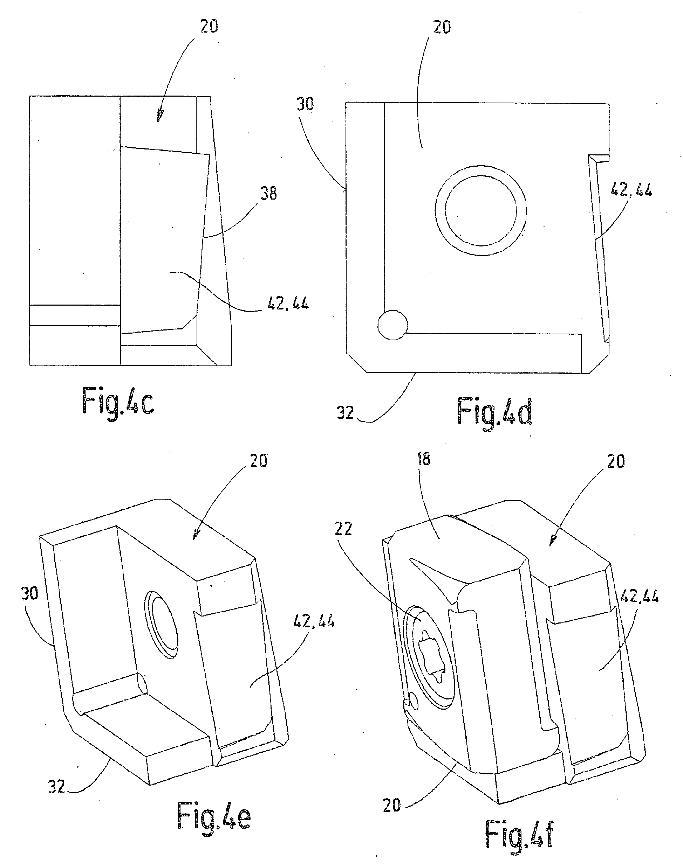

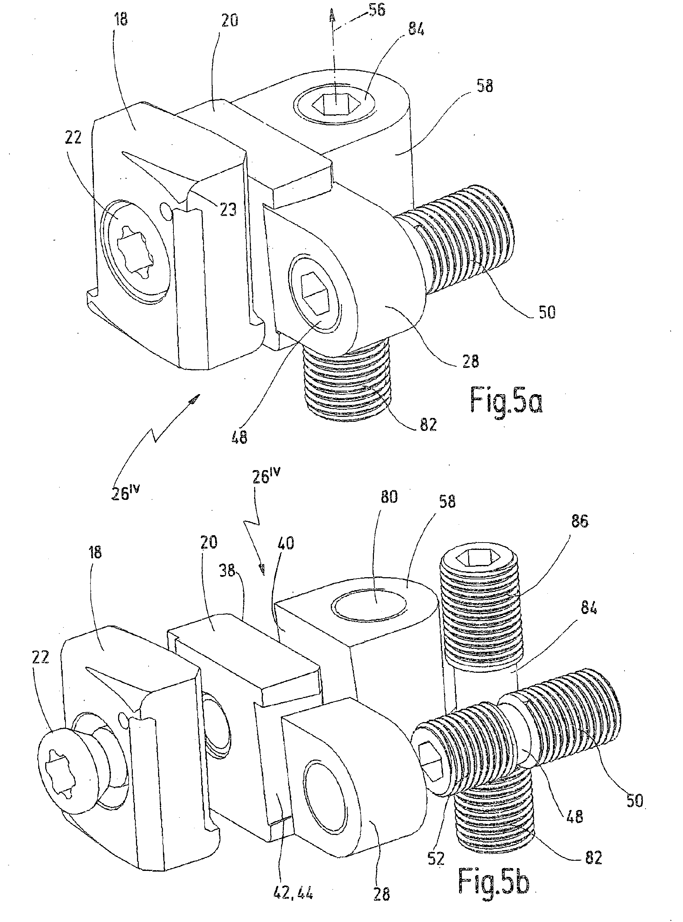

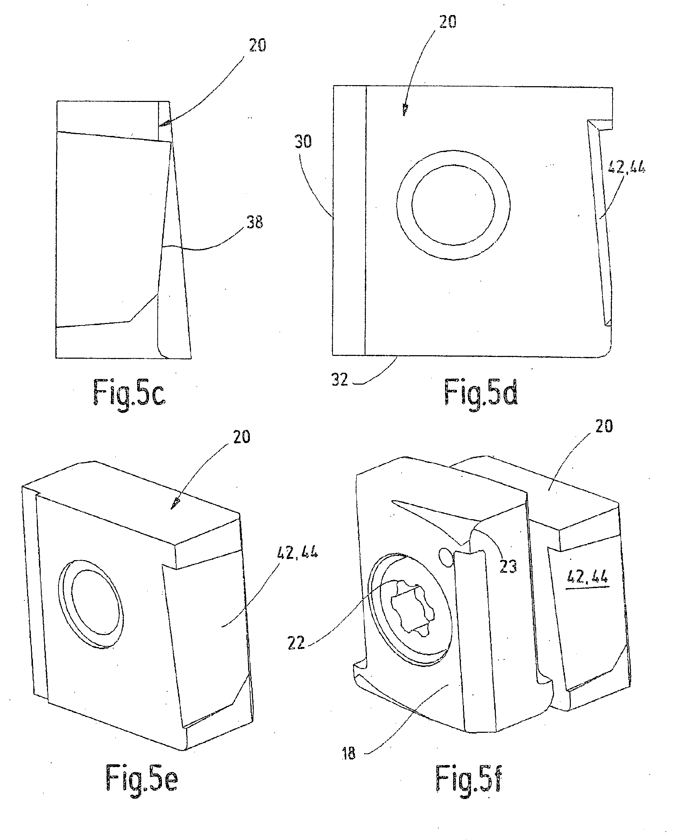

Die Verstellmechanismen 26'" und 24^{IV} der Ausführungsvarianten 3 und 4 gemäß Fig. 4 und 5 unterscheiden sich von den Ausführungsvarianten 1 und 2 gemäß Fig. 2 und 3 im Wesentlichen dadurch, dass die Betätigung des Stellkörpers 58 von oben her in axialer Richtung erfolgt. Der Stellkörper 58 weist zu diesem Zweck ein Innengewinde 80 zur Aufnahme des einen Gewindeteils 86 einer Differentialschraube 84 auf, deren zweites Gewindeteil 82 in ein Innengewinde des Grundkörpers 12 eingreift. Die Gewindesteigungen der beiden Gewindeteile 82, 86 sind dabei so gewählt, dass der Stellkörper 58 in Richtung der Verschiebeachse 56 mit einer vorgegebenen Untersetzung in die eine oder andere Richtung verschoben wird. Einer zusätzlichen Druckfeder 60 bedarf es hierbei nicht. Die Verschiebung des Stellkörpers 58 wird umgesetzt in eine Radialverschiebung des die Schneidplatte 18 tragende Schneidenträger 20.

Die Ausführungsvariante 3 (Fig. 4) und Ausführungsvariante 4 (Fig. 5) unterscheiden sich nur in der Ausbildung des Schneidenträgers 20, der im Falle der Ausführungsvariante 3 nach Art einer Kassette mit zwei Seitenwänden für die Abstützung der Schneidplatte 18 versehen ist (Fig. 4c - f), während im Falle der Ausführungsvariante 4 der Schneidenträger 20 als wandloser Quader ausgebildet ist (Fig. 5c - f). Im letzteren Falle erfolgt die Abstützung der Schneidplatte 18 zusammen mit dem Schneidenträger 20 an den Seitenstützflächen 34, 36 der Tasche 24 des Grundkörpers 12.

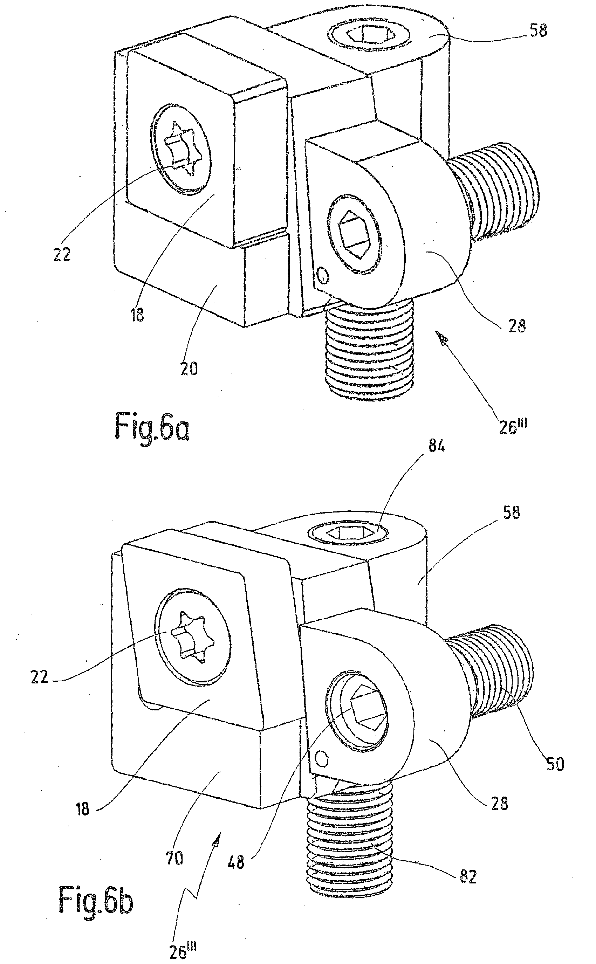

In Fig. 6a und b ist für den Fall der Ausführungsvariante 3 erkennbar, dass in ein und demselben Maschinenwerkzeug Schneidenträger 20 für unterschiedliche Schneidplattenformen (z.B. mit quadratischem oder rhombischem Umriss) und damit für verschiedene Anwendungsfälle eingesetzt werden können.

Zusammenfassend ist folgendes festzuhalten: Die Erfindung bezieht sich auf ein Maschinenwerkzeug mit verstellbarer Schneidplatte. Das rundlaufende Maschinenwerkzeug umfasst im Wesentlichen einen eine Drehachse 10 aufweisenden Grundkörper 12, mindestens eine in den Grundkörper 12 eingeformte Tasche 24 und mindestens einen eine Schneidplatte 18 tragenden Schneidenträger 20. Der Schneidenträger 20 liegt mit zwei einen Winkel miteinander einschließenden Seitenflächen 30, 32 gegen je eine Seitenstützfläche 34, 36 und mit ihrem Boden 38 gegen eine Bodenstützfläche 40 der Tasche 24 an und ist mit einem Spannelement 28 lösbar in der Tasche 24 eingespannt. Die Schneidplatte 18 steht mit einer wirksamen Schneide 23 über den Schneidenträger 20 und den Grundkörper 12 nach außen über. Um eine Feinverstellung auch von Tangential-Schneidplatten im Grundkörper zu ermöglichen, wird gemäß der Erfindung vorgeschlagen, dass die Bodenstützfläche 40 eine an einem gegenüber dem Grundkörper 12 längs einer Verschiebeachse 56 verschiebbaren Stellkörper 58 angeordnete, mit der Verschiebeachse 56 einen spitzen Winkel einschließende Keilfläche bildet, gegen die der Schneidenträger 20 mit seinem als Gegenkeil ausgebildeten Boden 38 anliegt. Außerdem bilden die beiden Seitenstützflächen 34, 36 im Wesentlichen senkrecht zur Verschiebeachse 56 des Stellkörpers 58 ausgerichtete Führungsflächen für den Schneidenträger 20, wenn dieser durch Verschieben des Stellkörpers 58 einen Verstellvorgang ausführt.

## Patentansprüche

1. Maschinenwerkzeug mit einem Grundkörper (12), mit mindestens einer in den Grundkörper (12) eingeformten Tasche (24) und mit mindestens einem eine Schneidplatte (18) tragenden Schneidenträger (20), wobei der Schneidenträger (20) mit zwei einen Winkel miteinander einschlieβenden Seitenflächen (30, 32) gegen je eine Seitenstützfläche (34, 36) und mit ihrem Boden (38) gegen eine Bodenstützfläche (40) der Tasche anliegt und mit einem Spannelement (28) lösbar in die Tasche (24) eingespannt ist und wobei die Schneidplatte (18) mit einer wirksamen Schneide (23) über den Schneidenträger (20) und den Grundkörper (12) nach außen übersteht, wobei die Bodenstützfläche (40) eine an einem gegenüber dem Grundkörper (12) längs einer Verschiebeachse (56) verschiebbaren Stellkörper (58) angeordnete, mit der Verschiebeachse (56) einen spitzen Winkel einschließende Keilfläche bildet, gegen die der Schneidenträger (20) mit seinem als Gegenkeil ausgebildeten Boden (38) anliegt, und wobei die beiden Seitenstützflächen (34, 36) im Wesentlichen senkrecht zur Verschiebeachse (56) des Stellkörpers (58) ausgerichtete Führungsflächen für den Schneidenträger (20) bei einem durch Verschieben des Stellkörpers (58) ausgeführten Verstellvorgang bilden, **dadurch gekennzeichnet, dass** der Schneidenträger (20) an einer dritten Seitenfläche (42) eine mit den beiden gegen die Seitenstützflächen (34, 36) anliegenden Seitenflächen (30, 32) und mit dem Boden (38) je einen Winkel einschließende Keilfläche (44) bildet, gegen die ein Gegenkeil (46) des relativ zum Grundkörper (12) mit einem Verstellorgan (48) unter Ausübung einer in Richtung der beiden Seitenstützflächen (34, 36) und der Bodenstützfläche (40) weisenden Spannkraft verschiebbaren Spannelements (28) anliegt.

2. Maschinenwerkzeug nach Anspruch 1, **dadurch gekennzeichnet, dass** die Verschiebeachse (56) des Stellkörpers (58) parallel zu einer Drehachse (10) des Grundkörpers (12) ausgerichtet ist.

3. Maschinenwerkzeug nach Anspruch 1 oder 2, **dadurch gekennzeichnet, dass** die Schneidplatte (18) mittels eines Spann- oder Klemmelements, insbesondere mittels einer Klemmschraube (22), starr mit dem Schneidenträger (20) verbunden ist.

4. Maschinenwerkzeug nach einem der Ansprüche 1 bis 3, **dadurch gekennzeichnet, dass** der Schneidenträger (20) als Kassette ausgebildet ist.

5. Maschinenwerkzeug nach einem der Ansprüche 1 bis 4, **dadurch gekennzeichnet, dass** der Stellkörper (58) mittels eines im Grundkörper (12) angeordneten Keil- und/oder Gewindetriebs (62) relativ zum Grundkörper (12) verschiebbar ist.

6. Maschinenwerkzeug nach einem der Ansprüche 1 bis 5, **dadurch gekennzeichnet, dass** das Spannelement (28) mittels eines im Grundkörper (18) angeordneten Keil- und/oder Gewindetriebs (48) betätigbar ist.

7. Maschinenwerkzeug nach Anspruch 5 oder 6, **dadurch gekennzeichnet, dass** der Keil- und/oder Gewindetrieb (62, 48) eine Schraube (64) oder eine Differentialschraube (70, 84) umfasst, die mit einem Gewindeteil (72) in ein Innengewinde des Grundkörpers (12) eingreift und mit einem Keil (78), einem Konus (66) oder einem weiteren Gewindeteil (74) gegen den Stellkörper (58) oder das Spannelement (28) einwirkt.

8. Maschinenwerkzeug nach Anspruch 7, **dadurch gekennzeichnet, dass** die Schraube (64) eine gegen den Stellkörper (58) anliegende Konusspitze (66) aufweist.

9. Maschinenwerkzeug nach Anspruch 7, **dadurch gekennzeichnet, dass** die Differentialschraube (70) eine Gewindehülse (76) trägt, die eine gegen den Stellkörper (58) anliegende Keilfläche (38) aufweist.

10. Maschinenwerkzeug nach einem der Ansprüche 1 bis 9, **dadurch gekennzeichnet, dass** der Stellkörper (58) entgegen der Kraft mindestens einer Rückstellfeder (60) verschiebbar ist.

11. Maschinenwerkzeug nach Anspruch 7, dadurch gekennzeichet, dass die Differentialschraube (70, 84) mit ihrem einen Gewindeteil (86, 52) in ein Innengewinde (80, 54) des Stellkörpers (58) oder des Spannelements (28) und mit ihrem anderen Gewindeteil (82, 50) in ein Innengewinde des Grundkörpers (12) eingreift.

12. Maschinenwerkzeug nach einem der Ansprüche 1 bis 11, **dadurch gekennzeichnet, dass** der Schneidenträger (20) einen Plattensitz für eine als Wechselschneidplatte ausgebildete Schneidplatte (18) aufweist.

13. Maschinenwerkzeug nach einem der Ansprüche 1 bis 12, **gekennzeichnet durch** eine Gruppe aus mindestens zwei am Grundkörper (12) gegeneinander austauschbare Schneidenträger (20), die Plattensitze für unterschiedliche Schneidplattengeometrien aufweisen.

## Claims

1. A machine tool with a base member (12), with at least one pocket (24) formed in the base member (12) and with at least one cutter carrier (20) carrying a cutting insert (18), wherein the cutter carrier (20) lies with two side surfaces (30, 32), enclosing an angle with one another, against a respective side supporting surface (34, 36) and with its bottom (38) against a bottom supporting surface (40) of the pocket and is releasably clamped in the pocket (24) by a clamping element (28), and wherein the cutting insert (18) protrudes with an effective cutting edge (23) in the outward direction beyond the cutter carrier (20) and the base member (12), wherein the bottom supporting surface (40) forms a wedge surface, which is arranged on an adjusting member (58) that is displaceable with respect to the base member (12) along an axis of displacement (56) and encloses an acute angle with the axis of displacement (56) and against which the cutter carrier (20) lies with its bottom (38) formed as a complementing wedge, and wherein the two side supporting surfaces (34, 36) form guiding surfaces for the cutter carrier (20), aligned substantially perpendicularly in relation to the axis of displacement (56) of the adjusting member (58), during a displacing operation performed by displacement of the adjusting member (58), **characterized in that**, on a third side surface (42), the cutter carrier (20) forms a wedge surface (44), which encloses a respective angle with the two side surfaces (30, 32) lying against the side supporting surfaces (34, 36) and with the bottom (38) and against which there lies a complementing wedge (46) of the clamping element (28) that can be displaced in relation to the base member (12) by an adjusting member (48) while exerting a clamping force extending in the direction of the two side supporting surfaces (34, 36) and the bottom supporting surface (40).

2. The machine tool as claimed in claim 1, **characterized in that** the axis of displacement (56) of the adjusting member (58) is aligned parallel to an axis of rotation (10) of the base member (12).

3. The machine tool as claimed in claim 1 or 2, **characterized in that** the cutting insert (18) is rigidly connected to the cutter carrier (20) by means of a clamping element, in particular by means of a clamping screw (22).

4. The machine tool as claimed in one of claims 1 to 3, **characterized in that** the cutter carrier (20) is formed as a cartridge.

5. The machine tool as claimed in one of claims 1 to 4, **characterized in that** the adjusting member (58) can be displaced in relation to the base member (12) by means of a wedge- and/or thread-type drive (62) arranged in the base member (12).

6. The machine tool as claimed in one of claims 1 to 5, **characterized in that** the clamping element (28) can be actuated by means of a wedge- and/or thread-type drive (48) arranged in the base member (18).

7. The machine tool as claimed in claim 5 or 6, **characterized in that** the wedge- and/or thread-type drive (62, 48) comprises a screw (64) or differential screw (70, 84), which engages with a threaded part (72) in an internal thread of the base member (12) and acts with a wedge (78), a cone (66) or a further threaded part (74) against the adjusting member (58) or the clamping element (28).

8. The machine tool as claimed in claim 7, **characterized in that** the screw (64) has a cone tip (66) lying against the adjusting member (58).

9. The machine tool as claimed in claim 7, **characterized in that** the differential screw (70) carries a threaded sleeve (76), which has a wedge surface (38) lying against the adjusting member (58).

10. The machine tool as claimed in one of claims 1 to 9, **characterized in that** the adjusting member (58) is displaceable against the force of at least one restoring spring (60).

11. The machine tool as claimed in claim 7, **characterized in that** the differential screw (70, 84) engages with its one threaded part (86, 52) in an internal thread (80, 54) of the adjusting member (58) or the clamping member (28) and with its other threaded part (82, 50) in an internal thread of the base member (12).

12. The machine tool as claimed in one of claims 1 to 11, **characterized in that** the cutter carrier (20) has an insert seat for a cutting insert (18) formed as an indexable insert.

13. The machine tool as claimed in one of claims 1 to 12, **characterized by** a group of at least two cutter carriers (20) which can be exchanged for one another on the base member (12) and have insert seats for different geometries of cutting insert.

## Revendications

1. Outil d'usinage comprenant un corps de base (12), comportant au moins une cavité (24) formée dans le corps de base (12) et comportant au moins un porte-plaquette (20) portant une plaquette de coupe (18), le porte-plaquette (20) s'appliquant, par deux surfaces latérales (30, 32) formant un angle l'une avec l'autre, contre une surface d'appui latérale (34, 36) respective et, par son fond (38), contre une surface d'appui de fond (40) de la cavité, et étant serré de manière amovible dans la cavité (24) à l'aide d'un élément de serrage (28), et la plaquette de coupe (18) faisant saillie vers l'extérieur, par une arête de coupe active (23), au-delà du porte-plaquette (20) et du corps de base (12), la surface d'appui de fond (40) formant une surface cunéiforme disposée sur un corps de réglage (58) pouvant être déplacé par rapport au corps de base (12) le long d'un axe de déplacement (56) et formant avec l'axe de déplacement (56) un angle aigu, contre laquelle surface cunéiforme s'applique le porte-plaquette (20) par son fond (38) réalisé sous forme de coin conjugué, et les deux surfaces d'appui latérales (34, 36) formant des surfaces de guidage, orientées essentiellement perpendiculairement à l'axe de déplacement (56) du corps de réglage (58), pour le porte-plaquette (20) lors d'une opération de réglage effectuée par déplacement du corps de réglage (58), **caractérisé en ce que** le porte-plaquette (20) forme, au niveau d'une troisième surface latérale (42), une surface cunéiforme (44) formant avec les deux surfaces latérales (30, 32) s'appliquant contre les surfaces d'appui latérales (34, 36) et avec le fond (38) un angle respectif, contre laquelle surface cunéiforme s'applique un coin conjugué (46) de l'élément de serrage (28) pouvant être déplacé par rapport au corps de base (12) à l'aide d'un organe de déplacement (48) en exerçant une force de serrage orientée en direction des deux surfaces d'appui latérales (34, 36) et de la surface d'appui de fond (40).

2. Outil d'usinage selon la revendication 1, **caractérisé en ce que** l'axe de déplacement (56) du corps de réglage (58) est orienté parallèlement à un axe de rotation (10) du corps de base (12).

3. Outil d'usinage selon la revendication 1 ou 2, **caractérisé en ce que** la plaquette de coupe (18) est reliée rigidement au porte-plaquette (20) au moyen d'un élément de serrage ou de blocage, en particulier au moyen d'une vis de blocage (22).

4. Outil d'usinage selon l'une quelconque des revendications 1 à 3, **caractérisé en ce que** le porte-plaquette (20) est réalisé sous forme de cassette.

5. Outil d'usinage selon l'une quelconque des revendications 1 à 4, **caractérisé en ce que** le corps de réglage (58) peut être déplacé par rapport au corps de base (12) au moyen d'un entraînement à coin et/ou fileté (62) disposé dans le corps de base (12).

6. Outil d'usinage selon l'une quelconque des revendications 1 à 5, **caractérisé en ce que** l'élément de serrage (28) peut être actionné au moyen d'un entraînement à coin et/ou fileté (48) disposé dans le corps de base (18).

7. Outil d'usinage selon la revendication 5 ou 6, **caractérisé en ce que** l'entraînement à coin et/ou fileté (62, 48) comporte une vis (64) ou une vis différentielle (70, 84) qui vient en prise, par une partie filetée (72), dans un filetage intérieur du corps de base (12) et qui agit, par un coin (78), un cône (66) ou une partie filetée (74) supplémentaire, contre le corps de réglage (58) ou l'élément de serrage (28).

8. Outil d'usinage selon la revendication 7, **caractérisé en ce que** la vis (64) comprend une pointe de cône (66) s'appliquant contre le corps de réglage (58).

9. Outil d'usinage selon la revendication 7, **caractérisé en ce que** la vis différentielle (70) porte une douille filetée (76) qui comprend une surface cunéiforme (38) s'appliquant contre le corps de réglage (58).

10. Outil d'usinage selon l'une quelconque des revendications 1 à 9, **caractérisé en ce que** le corps de réglage (58) peut être déplacé à l'encontre de la force d'au moins un ressort de rappel (60).

11. Outil d'usinage selon la revendication 7, **caractérisé en ce que** la vis différentielle (70, 84) vient en prise, par l'une de ses parties filetées (86, 52), dans un filetage intérieur (80, 54) du corps de réglage (58) ou de l'élément de serrage (28) et, par son autre partie filetée (82, 50), dans un filetage intérieur du corps de base (12).

12. Outil d'usinage selon l'une quelconque des revendications 1 à 11, **caractérisé en ce que** le porte-plaquette (20) comprend un logement de plaquette pour une plaquette de coupe (18) réalisée sous forme de plaquette de coupe amovible.

13. Outil d'usinage selon l'une quelconque des revendications 1 à 12, **caractérisé par** un groupe d'au moins deux porte-plaquettes interchangeables (20) sur le corps de base (12), lesquels comprennent des logements de plaquette pour différentes géométries de plaquette de coupe.
